# EUROPÄISCHE PATENTSCHRIFT

(11) **EP 4 399 129 B1**
(45) Veröffentlichungstag und Bekanntmachung des Hinweises auf die Patenterteilung: **21.01.2026**
(21) Anmeldenummer: 22772421.8
(22) Anmeldetag: 07.09.2022
(51) Int. Cl.: B60T 8/88, B60T 8/92

(54) **VERFAHREN ZUM BETREIBEN EINES BREMSSYSTEMS UND BREMSSYSTEM**
METHOD OF OPERATING A BRAKING SYSTEM AND BRAKING SYSTEM
PROCÉDÉ DE FONCTIONNEMENT D'UN SYSTÈME DE FREINAGE ET SYSTÈME DE FREINAGE

(30) Priorität: 08.09.2021 DE 102021209941
(43) Veröffentlichungstag der Anmeldung: 17.07.2024
(73) Patentinhaber: AUMOVIO Germany GmbH, 60488 Frankfurt am Main (DE)
(72) Erfinder: SALEWSKI, Rene, 60488 Frankfurt am Main (DE); PUFF, Rüdiger, 60488 Frankfurt am Main (DE); BAUER, Maximilian, 60488 Frankfurt am Main (DE); SCHMIDT, Holger, 60488 Frankfurt am Main (DE)
(74) Vertreter: Aumovio Corporation
(86) Internationale Anmeldenummer: PCT/DE2022/200209
(87) Internationale Veröffentlichungsnummer: WO 2023/036384

(56) Entgegenhaltungen:
- DE-A1- 102017 216 118
- DE-A1- 102019 215 360

## Beschreibung

Die Erfindung betrifft ein Verfahren zum Betreiben eines Bremssystems mit einem ersten Bremskreis und einem zweiten Bremskreis sowie ein Bremssystem zur Ausführung eines solchen Verfahrens.

Bremssysteme werden insbesondere verwendet, um Kraftfahrzeuge zu verzögern. Aufgrund ihrer hohen Bedeutung für die Verkehrssicherheit werden sie typischerweise für bestimmte Fehlerfälle so ausgelegt, dass trotz eines Fehlerfalls noch eine Bremsung des Fahrzeugs möglich ist. Derartige Anforderungen können bei Fahrzeugen, welche hochautonom fahren, noch zusätzlich erhöht sein.

Die DE 102019215360 A1 zeigt eine gattungsgemäße Bremsanlage mit einem ersten Bremskreis und einem zweiten Bremskreis.

Weiter lehrt die DE 102017216118 A1, bei einem Fehler wie einer Leckage in verschiedene Betriebsmodi zu schalten. Hierzu werden zwei Ausführungsformen offenbart wie mit einer Leckage umgegangen werden soll.

Eine erste Reaktion wird als zweites Betriebsverfahren bezeichnet. Hierbei ist das erste Bremssystem passiv (stromlos) und ein Bremswunsch des virtuellen Fahrers (Autopiloten) wird ausschließlich durch das zweite Bremssyste umgesetzt (sog. exklusives Betriebskonzept).

In einem dritten Betriebsverfahren wird ein kooperatives Betriebskonzept von erstem und zweitem Bremssystem umgesetzt. Hierbei wird in allen vier Radbremsen der Druck mittels der zweiten Druckbereitstellungseinrichtung aufgebaut.

Es ist deshalb eine Aufgabe der Erfindung, ein Verfahren zum Betreiben eines Bremssystems bereitzustellen, welches im Vergleich zu bekannten Verfahren alternativ oder besser ausgeführt ist. Es ist des Weiteren eine Aufgabe der Erfindung, ein zugehöriges Bremssystem bereitzustellen. Dies wird erfindungsgemäß durch ein Verfahren und ein Bremssystem gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Betreiben eines Bremssystems gemäß Anspruch 1 mit einem ersten Bremskreis und einem zweiten Bremskreis. Das Bremssystem weist eine Pumpe und einen Linearaktuator auf. Das Verfahren weist folgende Schritte auf:
- Trennen des ersten Bremskreises vom zweiten Bremskreis, dann
- Beaufschlagen des ersten Bremskreises mittels der Pumpe, und
- Beaufschlagen des zweiten Bremskreises mittels des Linearaktuators.

Durch eine solche Vorgehensweise kann der erste Bremskreis vom zweiten Bremskreis abgetrennt werden, und anschließend können die beiden Bremskreise unabhängig voneinander beaufschlagt werden. Dies kann insbesondere einen Vorteil mit sich bringen, wenn eine Leckage erkannt wird, da die Bremskreise voneinander getrennt werden und somit ein nur in einem Bremskreis vorhandenes Leck nicht auf den anderen Bremskreis zurückwirkt. Die Verfahrensführung sei insbesondere so verstanden, dass das Beaufschlagen des ersten Bremskreises mittels der Pumpe und das Beaufschlagen des zweiten Bremskreises mittels des Linearaktuators gleichzeitig bzw. in einem gemeinsamen Zeitraum ausgeführt werden, und zwar nachdem der erste Bremskreis vom zweiten Bremskreis getrennt wurde.

Unter einem Bremskreis kann insbesondere eine Anordnung von Leitungen und/oder Ventilen in einem Bremssystem verstanden werden, wobei ein Bremskreis typischerweise einer Achse zugeordnet ist (bei Schwarz-Weiß-Aufteilung) oder einem Paar von diagonal gegenüberliegenden Rädern zugeordnet ist (bei diagonaler Aufteilung). Ein Linearaktuator ist insbesondere ein hydrostatisch arbeitender Druckerzeuger, welcher diskontinuierlich arbeitet, also sich regelmäßig auflädt und dann Druck abgibt. Insbesondere kann er mittels eines Kolbens ausgeführt sein, welcher durch einen Elektromotor innerhalb eines Zylinders bewegbar ist. Unter einer Pumpe sei insbesondere eine hydrodynamisch arbeitende Einrichtung zur Druckerzeugung verstanden, welche einen kontinuierlichen Volumenfluss bereitstellen kann.

Unter einem Beaufschlagen eines Bremskreises sei insbesondere verstanden, dass innerhalb des Bremskreises Druck erzeugt wird, welcher dann zum Bremsen verwendet werden kann. Die genaue Steuerung einer Druckbeaufschlagung eines Rads kann insbesondere mittels jeweiliger Einlassventile und/oder Auslassventile erfolgen.

Das Verfahren wird erfindungsgemäß ansprechend auf eine erkannte Leckage ausgeführt. Insbesondere in einem solchen Fall hat sich das Verfahren als vorteilhaft erwiesen, da die Wirkungen der Leckage auf einen Bremskreis begrenzt werden können.

Eine Leckage kann beispielsweise dadurch erkannt werden, dass ein Flüssigkeitsstand in einem Bremsflüssigkeitsbehälter einen vorgegebenen Schwellenwert unterschreitet. Dies deutet typischerweise darauf hin, dass irgendwo innerhalb des Bremssystems Fluid ausläuft, da das Bremssystem ansonsten ein hydraulisch geschlossenes System bilden sollte. Es kann auch eine andere Maßnahme oder Überwachungsfunktion beispielsweise an einem primären Bremssystem oder an dem Bremssystem eine Leckage detektieren, insbesondere derart, dass dies zu einem Schließen eines Kreistrennventils führt.

Der erste Bremskreis kann insbesondere einer Vorderachse zugeordnet sein. Der zweite Bremskreis kann insbesondere einer Hinterachse zugeordnet sein. Dies hat sich für typische Anwendungen als vorteilhaft herausgestellt, wobei auch die umgekehrte Aufteilung möglich ist. Auch eine diagonale Aufteilung ist möglich.

Der Linearaktuator kann insbesondere in einem ersten Modul des Bremssystems angeordnet sein. Die Pumpe kann insbesondere in einem zweiten Modul des Bremssystems angeordnet sein. Die Module können insbesondere separat zueinander sein. Dies erlaubt eine separate Anordnung der Module, wodurch ein Platz beispielsweise in einem Motorraum besser ausgenutzt werden kann. Außerdem erlaubt es die Verwendung standardisierter Komponenten, welche auch für andere Zwecke geeignet sein können und modular zusammengefügt werden können.

Gemäß einer Ausführung ist in dem ersten Modul auch ein Hauptbremszylinder angeordnet, welcher manuell betätigbar ist und fluidisch mit dem ersten Bremskreis und/oder dem zweiten Bremskreis verbunden ist. Dies erlaubt es, ein Bremssystem vorzusehen, welches auch manuell betätigbar ist und beispielsweise eine hydraulische Rückfallebene hat. Das Verfahren kann jedoch auch in einem nicht hydraulisch verkoppelten Bremssystem angewendet werden, in welchem sich beispielsweise kein manuell betätigbarer Hauptbremszylinder mehr befindet. Beispielsweise kann in diesem Fall ein elektronisches Bremspedal verwendet werden.

Der erste Bremskreis und der zweite Bremskreis können beispielsweise mittels eines Kreistrennventils verbunden sein. Die Bremskreise können insbesondere durch Schließen des Kreistrennventils voneinander getrennt werden.

Der erste Bremskreis und der zweite Bremskreis können beispielsweise gemeinsam eine vorgegebene Bremswirkung erzeugen. Die Bremswirkung kann beispielsweise durch ein Fahrassistenzsystem oder durch eine Fahrerbremsanforderung vorgegeben werden. Beispielsweise kann dies durch Sensieren eines Bremspedals erfolgen. Dies erlaubt ein Abbremsen des Fahrzeugs entsprechend einer Bremsanforderung.

Die Bremswirkung kann beispielsweise durch einen Fahrerbremswunsch und/oder ein Fahrassistenzsystem und/oder ein System zum autonomen Fahren vorgegeben werden. Bei einem System zum autonomen Fahren kann es sich insbesondere um ein System handeln, welches das Fahrzeug ohne Fahrereingriff selbsttätig führt. Insbesondere in diesem Fall wird die durch das Verfahren mögliche höhere Sicherheit besonders vorteilhaft, da bei autonom fahrenden Fahrzeugen höhere Sicherheitsanforderungen zu erfüllen sind.

Die Pumpe und der Linearaktuator können insbesondere unabhängig voneinander Bremsflüssigkeit ansaugen. Insbesondere können sie Bremsflüssigkeit aus einem Bremsflüssigkeitsbehälter ansaugen. Durch das unabhängige Ansaugen wird die Wirkung eines Lecks verringert. Beispielsweise können sie separate Leitungen zum Ansaugen haben, welche jeweils separat zum Bremsflüssigkeitsbehälter führen.

Eine Schlupfregelung kann insbesondere an jeweiligen Radbremsen über zugeordnete Radventile erfolgen. Dadurch kann ein gezielter Regeleingriff erfolgen, um an den Radbremsen einen gewünschten Druck einzustellen.

Auslassventile des ersten Bremskreises, welche eine Verbindung zum zweiten Bremskreis herstellen, können insbesondere während des Verfahrens geschlossen werden. Dadurch kann insbesondere erreicht werden, dass ein Rückfluss von Bremsflüssigkeit vom ersten Bremskreis in den zweiten Bremskreis vermieden wird, so dass die Wirkung eines Lecks besser lokalisiert werden kann.

Die Pumpe kann gemäß einer Ausführung nach dem Trennen der Bremskreise Fluid für eine erste Bremse in einem ersten Kreislauf pumpen und Fluid für eine zweite Bremse in einem zweiten Kreislauf pumpen. Die beiden Kreisläufe können insbesondere separat voneinander sein. Jeder der Kreisläufe kann einen eigenen Vorratsbehälter aufweisen, in welchem Fluid gespeichert werden kann. Dadurch wird eine unabhängige Versorgung der Pumpe sichergestellt und ein Leck sogar auf eine von zwei Bremsen, welche von der Pumpe versorgt werden, lokalisiert.

Die Pumpe kann insbesondere eine Kolbenpumpe sein. Diese ermöglicht typischerweise eine kontinuierliche Förderung. Sie kann insbesondere von einem Elektromotor angetrieben werden.

Die Erfindung betrifft des Weiteren ein Bremssystem für ein Kraftfahrzeug. Das Bremssystem weist einen ersten Bremskreis und einen zweiten Bremskreis auf. Es weist eine Pumpe auf, welche mit dem ersten Bremskreis fluidisch verbunden ist. Es weist einen Linearaktuator auf, welcher mit dem zweiten Bremskreis fluidisch verbunden ist. Des Weiteren weist das Bremssystem ein Kreistrennventil auf, welches den ersten Bremskreis und den zweiten Bremskreis fluidisch verbindet. Außerdem weist das Bremssystem eine Steuerungsvorrichtung auf, welche dazu konfiguriert ist, ein Verfahren wie hierin beschrieben auszuführen. Bezüglich des Verfahrens kann auf alle hierin beschriebenen Ausführungen und Varianten zurückgegriffen werden.

Mittels des Bremssystems können die bereits weiter oben beschriebenen Vorteile erreicht werden. Bezüglich der einzelnen Merkmale sei auf die obige Beschreibung des Verfahrens verwiesen, welche entsprechend für das Bremssystem angewendet werden kann.

Mit anderen Worten kann beispielsweise in einem Fehlerfall, insbesondere in einem Fehlerfall einer Leckage, eine Kreistrennung zwischen Vorderachse und Hinterachse beibehalten werden und eine Druckaufbauanforderung von beiden noch vorhandenen Druckstellern anteilig ausgeführt werden. An der Vorderachse kann beispielsweise ein Drucksteller eines zusätzlichen Moduls einen anteiligen Druckaufbau an den beiden Vorderrädern erzeugen. Die Hinterachse kann beispielsweise von einem Drucksteller eines weiteren Moduls, insbesondere eines größeren Moduls, welches auch an sich ein Bremssystem darstellen kann, versorgt werden. Somit ist in jedem Fall gewährleistet, dass eine Leckage in einem Radbremskreis nicht zum Komplettausfall führt. Es hat sich gezeigt, dass dadurch eine Verzögerung erreicht werden kann, welche immer noch mehr als das Doppelte der geforderten Verzögerung eines Hilfsbremssystems von 2,44 m/s² beträgt, da eine Dreireisbremsaufteilung entsteht, die von zwei Aktuatoren betätigt wird. Die Dreiteilung der Bremskreise erfolgt dadurch, dass ein zusätzliches Modul eine zweikreisige Kolbenpumpe hat, welche pro Kreis intern über ein Bremsflüssigkeitsreservoir verfügt, d.h. auch wenn ein Vorderrad von der Leckage betroffen ist, verbleibt die Druckstellfähigkeit am verbliebenen Vorderrad.

Der hierin beschriebene Druckregelmodus kann als additiver Modus bezeichnet werden, da beide Aktuatoren additiv zur Verzögerung des Fahrzeugs beitragen. Üblicherweise steht im Fehlerfall "Leckage" eine Fahrerwunscherfassung noch zur Verfügung. Damit kann sowohl eine Bremsanforderung von extern, beispielsweise von einem virtuellen Fahrer oder einem Autopiloten, als auch eine Bremsanforderung eines menschlichen Fahrers über das Bremspedal in diesem Modus ausgeführt werden.

Eine Umsetzung des Vorderachs-anteiligen Bremswunsches eines virtuellen Fahrers kann beispielsweise durch ein zusätzliches Modul mittels Druckaufbau durch eine Zwei-Kolbenpumpe bei geschlossenen Trennventilen und geöffneten Ansaugventilen erfolgen, welche die Saugseite der Pumpe mit internen Flüssigkeitskammern verbindet. Der Druckabbau kann insbesondere mittels des Abbauventils weiter in die interne Flüssigkeitskammer zurück erfolgen. Im Falle einer Leckage im Hinterachsbremskreis können damit die Vorderachsbremsen unabhängig mit Bremsdruck beaufschlagt werden.

Die Umsetzung des Hinterachs-anteiligen Bremswunsches eines virtuellen Fahrers kann durch Schalten eines Kreistrennventils und Ansteuerung eines Linearaktuators analog dem Verhalten bei diesem Fehlerbild zu einem Fahrzeug ohne Autopilotsystem erfolgen. Im Fall der Leckage im Vorderachsbremskreis können damit die Hinterachsbremsen unabhängig mit Bremsdruck beaufschlagt werden.

Ein zusätzliches Modul kann beispielsweise so ausgeführt sein, dass anhand von gemessenen Radsignalen und daraus abgeleiteter Fahrzeuggeschwindigkeit die Schlupfregelung zur Sicherstellung der Fahrzeugstabilität möglich ist. Für eine Schlupfregelung ist während des aktivierten ASI-Bremsmodus eine jeweilige Aktuatoreinheit zuständig. Die Schlupfregelung an einer Vorderachse kann über ein Backup-Steuergerät eines zusätzlichen Moduls erfolgen, die Regelung eines Schlupfs an der Hinterachse kann über ein Hauptsteuergerät des Bremssystems erfolgen. Dazu können in diesem Betriebsmodus die Radgeschwindigkeitssignale der jeweiligen Räder den Steuergeräten zur Verfügung gestellt werden. Dies kann im Gesamtsystem durch redundant vorhandene Radsensorsignale oder durch intelligente Verteilung der Radsensorsignale über elektrische Umschaltung in den Steuergeräten ausgeführt sein. Es kann sinnvoll sein, dazu eine gerechnete Fahrzeugreferenzgeschwindigkeit zwischen beiden Steuersignalen über Bussignale auszutauschen.

Das hierin beschriebene Betriebskonzept kann insbesondere das Thema von vier Radbremsen in der Rückfallebene eines Bremssystems für autonomes Fahren behandeln. Ein geforderter Druckaufbau an den Vorderradbremsen (generiert aus anteiligem Fahrerwunsch eingeleitet über das Bremspedal oder der Bremswunsch Virtual Driver im autonomen Fahrmodus) erfolgt bei erkanntem Leckagefehler (erkannt beispielsweise über Bremsflüssigkeitswarnschalter) mittels Ansteuerung eines Backup-Bremssystems, welches insbesondere in einem zusätzlichen Modul untergebracht sein kann. Durch Ansteuern des Pumpenmotors, Öffnen von Pumpensaugventilen und Schließen von Trennventilen zum Primärbremssystem kann ein Druckaufbau in die Vorderradbremssättel erfolgen. Der Druckabbau kann über Druckabbauventile, beispielsweise eines Hauptmoduls, oder durch Öffnen von Trennventilen erfolgen. Eine Schlupfregelung kann über geeignetes Schalten der genannten Radventile erfolgen, und zwar insbesondere abhängig vom gemessenen Radschlupf. Im Primärbremssystem kann bei erkanntem Leckagefehler ein Kreistrennventil geschlossen werden. Der Druckaufbau an den Hinterradbremssätteln kann durch Betätigung des Druckstellers wie beispielsweise eines Linearaktuators erfolgen. Eine Schlupfregelung beider Hinterräder kann durch Ansteuerung der jeweiligen Druckhalte- und Druckabbau-Ventile erfolgen.

Das hierin beschriebene Betriebskonzept eines redundanten Bremssystems ermöglicht auch im Fall einer erkannten Leckage die hier notwendige Bremskreistrennung. In diesem Fehlerfall ist das Bremssystem typischerweise immer in der Lage, bei einem Einzelfehler mehr als die doppelte der gesetzlich geforderten Verzögerung eines Hilfsbremssystems von 2,44 m/s² zu erreichen, da das System dann zu einer Dreikreis-Bremsanlage getrennt wird. Hierbei werden keine zusätzlichen Systemkomponenten benötigt, d.h. es wird eine kostengünstige Systemerweiterung realisiert.

Die Erfindung wird nun anhand der Figur beschrieben. Dabei zeigt:

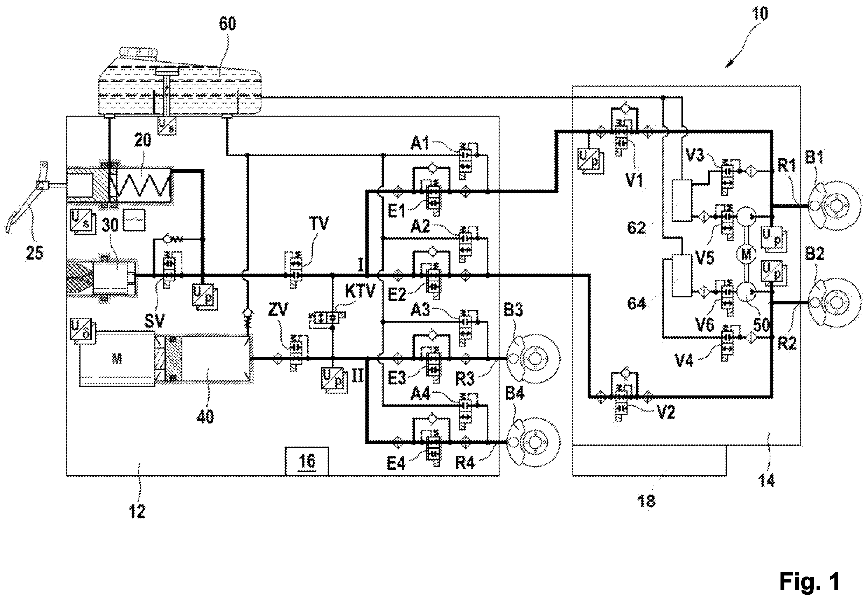

Fig. 1: ein Bremssystem.

Fig. 1 zeigt rein schematisch ein Bremssystem 10.

Das Bremssystem 10 weist einen Linearaktuator 40 und eine Pumpe 50 auf. Der Linearaktuator 40 stellt ein diskontinuierlich förderndes System dar. Die Pumpe 50 ist als kontinuierlich fördernde Kolbenpumpe ausgebildet. Sowohl der Linearaktuator 40 wie auch die Pumpe 50 werden jeweils von einem eigenen Motor M angetrieben.

Das Bremssystem 10 weist einen ersten Bremskreis I und einen zweiten Bremskreis II auf. Wie gezeigt ist vorliegend der erste Bremskreis I an der Pumpe 50 angeschlossen. Der zweite Bremskreis II ist hingegen an dem Linearaktuator 40 angeschlossen.

An dem Bremssystem 10 sind insgesamt vier Radbremsen, nämlich eine erste Radbremse B1, eine zweite Radbremse B2, eine dritte Radbremse B3 und eine vierte Radbremse B4 angeschlossen. Die ersten und zweiten Radbremsen B1, B2 sind dabei an dem ersten Bremskreis I angeschlossen. Die dritten und vierten Radbremsen B3, B4 sind an dem zweiten Bremskreis II angeschlossen. Somit kann für die ersten und zweiten Bremsen B1, B2 unabhängig von den dritten und vierten Bremsen B3, B4 ein individueller Druck eingestellt werden, oder anders ausgedrückt kann an beiden Bremskreisen **I,** II mit den jeweils angeschlossenen Radbremsen B ein jeweiliger individueller Druck rein elektrisch erzeugt und eingestellt werden.

Wie gezeigt ist das Bremssystem 10 in ein erstes Modul 12 und ein zweites Modul 14 aufgeteilt. Die Module 12, 14 können auch als Blöcke bezeichnet werden. Das erste Modul 12 kann als Hauptmodul bezeichnet werde. Das zweite Modul 14 kann als Zusatzmodul bezeichnet werden.

Zur Steuerung des Bremssystems 10 ist eine elektronische Steuerungsvorrichtung 16 vorhanden, welche zur Ausführung eines erfindungsgemäßen Verfahrens konfiguriert ist. Auch weitere Steuerungsaufgaben werden von der Steuerungsvorrichtung 16 übernommen. Das zweite Modul 14 weist darüber hinaus eine eigenständige Steuerungsvorrichtung 18 auf.

Bei dem ersten Modul 12 handelt es sich um ein Standard-Bremssystem, welches auch alleine verwendet werden könnte. Bei dem zweiten Modul 14 handelt es sich um ein Zusatzmodul für hochautonomes Fahren, bei welchem die zusätzliche Pumpe 50 vorgesehen ist, welche auch für den Fall eines Ausfalls von Komponenten des ersten Moduls 12 einen Betrieb des Bremssystems 10 zumindest teilweise sicherstellt.

Das Bremssystem 10 weist wie gezeigt einen Hauptbremszylinder 20 mit einem daran angeschlossenen Bremspedal 25 auf. Dies ermöglicht es einem Fahrer, einen Bremswunsch zu kommunizieren und für den Fall einer hydraulischen Rückfallebene auch einen Bremsdruck aufzubauen. Das Bremssystem 10 weist einen Simulator 30 auf, welcher über ein Simulatorventil SV mit dem Hauptbremszylinder 20 verbunden ist. Mit den weiteren hydraulischen Komponenten sind Hauptbremszylinder 20 und Simulator 30 über ein Trennventil TV verbunden. In einem Normalbremsbetrieb sind das Simulatorventil SV geöffnet und das Trennventil TV geschlossen, so dass der Hauptbremszylinder 20 nur mit dem Simulator 30 verbunden ist und ein Fahrer somit eine Kraft spürt, welche vom Simulator 30 erzeugt wird. Eine unmittelbare hydraulische Wirkung erfolgt nicht, vielmehr wird ein Fahrerbremswunsch über einen verbauten Wegsensor U/s und/oder über einen Drucksensor U/p erfasst. Der Fahrerbremswunsch wird dann automatisiert umgesetzt, und zwar über den Linearaktuator 40 und die Pumpe 50.

Die beiden Bremskreise I, II sind über ein Kreistrennventil KTV miteinander verbunden. Dies ermöglicht einen Druckausgleich bei offenem Kreistrennventil KTV und eine Trennung der beiden Bremskreise bei geschlossenem Kreistrennventil KTV. Der zweite Bremskreis II ist über ein Zuschaltventil ZV mit dem Linearaktuator 40 verbunden.

Das Bremssystem 10 weist ferner ein Fluidreservoir auf, welches als üblicher Bremsflüssigkeitsbehälter 60 ausgebildet ist. Dieser dient insbesondere als Rücklauf sowie zur Versorgung der Fluid verbrauchenden Komponenten. Hierauf wird nicht näher eingegangen, da es sich um bekannte Ausführungen handelt.

Die ersten und zweiten Radbremsen B1, B2 sind an ersten und zweiten Radanschlüssen R1, R2 des zweiten Moduls 14 angeschlossen. Diese sind an Einlassventilen E1, E2 und Auslassventilen A1, A2 des ersten Moduls 12 angeschlossen. Somit können sie sowohl vom ersten Modul 12 aus angesteuert werden wie auch von der Pumpe 50 des zweiten Moduls 14 aus mit Druck beaufschlagt werden. In dem zweiten Modul 14 befinden sich noch insgesamt sechs Ventile V1, V2, V3, V4, V5, V6, auf welche hier nicht näher eingegangen werden wird, soweit dies nicht für die Erklärung einer Funktionalität erforderlich ist.

Die dritten und vierten Radbremsen B3, B4 sind dagegen unmittelbar an dritten und vierten Radanschlüssen R3, R4 des ersten Moduls 12 angeschlossen, und zwar an jeweiligen Einlassventilen E3, E4 und Auslassventilen A3, A4 wie gezeigt.

Der Bremsflüssigkeitsbehälter 60 weist einen Füllstandssensor U/s auf, welcher einen Füllstand im Bremsflüssigkeitsbehälter 60 überwacht. Unterschreitet der Füllstand einen vorbestimmten Schwellenwert, so wird davon ausgegangen, dass ein Leck vorhanden ist.

Im Fall eines Lecks kann zunächst das Kreistrennventil KTV geschlossen werden. Dies lokalisiert die Wirkung des Lecks und ermöglicht eine voneinander unabhängige Beaufschlagung der beiden Bremskreise I, II mit Druck.

Der erste Bremskreis I wird mittels der Pumpe 50 mit Druck beaufschlagt. Hierzu werden insbesondere die Ventile V1, V2 des zweiten Moduls 14 geschlossen. Für einen Druckaufbau der angeschlossenen Radbremsen wird die Pumpe 50 angesteuert und die Ventile V5, V6 des zweiten Moduls 14 werden geöffnet, und zwar so lange bis ein Zieldruck erreicht ist. Dadurch wird ein für die erste Bremse B1 verwendetes Fluid von der Pumpe 50 über einen ersten Vorratsbehälter 62 im Kreislauf gepumpt, ebenso wird ein für die zweite Bremse B2 verwendetes Fluid von der Pumpe 50 über einen zweiten Vorratsbehälter 64 im Kreislauf gepumpt. Die Vorratsbehälter 62, 64 stellen dabei lokale Reservoire dar, welche sicherstellen, dass die Pumpe 50 immer ausreichend mit Fluid versorgt wird. Im Fehlerfall einer unterbrochenen Fluidverbindung zwischen erstem Modul 12 und zweitem Modul 14 kann der Druckaufbau autark weiter durchgeführt werden. Soll der Druck wieder reduziert werden, kann dies über die Ventile V3 und V4 des zweiten Moduls 14 erfolgen, die Ventile V1, V2 werden bei Beendigung der Bremsung typischerweise wieder geöffnet.

Der zweite Bremskreis II wird mittels des Linearaktuators 40 mit Druck beaufschlagt. Somit werden beide Bremskreise **I,** II unabhängig voneinander elektrisch mit Druck beaufschlagt. Auch eine entsprechende Einstellung des Drucks ist möglich. Insbesondere können die beiden Bremskreise **I,** II zusammen eine gewünschte Bremswirkung erzielen, welche insbesondere von einem Fahrerbremswunsch oder einem System zum autonomen Fahren vorgegeben werden kann.

Die beiden ersten und zweiten Bremsen B1, B2 können insbesondere einer Vorderachse zugeordnet sein. Die beiden dritten und vierten Bremsen B3, B4 können insbesondere einer Hinterachse zugeordnet sein. Auch eine andere Aufteilung ist jedoch möglich.

### Bezugszeichenliste:

- 10: Bremssystem
- 12: erstes Modul
- 14: zweites Modul
- 16: Steuerungsvorrichtung
- 18: Steuerungsvorrichtung
- 20: Hauptbremszylinder
- 25: Bremspedal
- 30: Simulator
- 40: Linearaktuator
- 50: Pumpe
- 60: Bremsflüssigkeitsbehälter
- 62: erster Vorratsbehälter
- 64: zweiter Vorratsbehälter
- V: Ventile
- SV: Simulatorventil
- TV: Trennventil
- ZV: Zuschaltventil
- KTV: Kreistrennventil
- A: Auslassventile
- E: Einlassventile
- R: Radanschlüsse
- B: Bremsen
- I: erster Bremskreis
- II: zweiter Bremskreis

## Patentansprüche

1. Verfahren zum Betreiben eines Bremssystems (10) mit einem ersten Bremskreis (I) und einem zweiten Bremskreis (II), wobei das Bremssystem (10) eine Pumpe (50) und einen Linearaktuator (40) aufweist,
wobei das Verfahren ansprechend auf eine erkannte Leckage folgende Schritte ausführt:
- Trennen des ersten Bremskreises (I) vom zweiten Bremskreis (II), dann
- Beaufschlagen des ersten Bremskreises (I) mittels der Pumpe (50), und
- Beaufschlagen des zweiten Bremskreises (II) mittels des Linearaktuators (40), wobei das Beaufschlagen des ersten Bremskreises mittels der Pumpe und das Beaufschlagen des zweiten Bremskreises mittels des Linearaktuators gleichzeitig bzw. in einem gemeinsamen Zeitraum ausgeführt werden.

2. Verfahren nach Anspruch 1,
- wobei die Leckage dadurch erkannt wird, dass ein Flüssigkeitsstand in einem Bremsflüssigkeitsbehälter (60) einen vorgegebenen Schwellenwert unterschreitet.

3. Verfahren nach einem der vorhergehenden Ansprüche,
- wobei der erste Bremskreis (I) einer Vorderachse zugeordnet ist und der zweite Bremskreis (II) einer Hinterachse zugeordnet ist.

4. Verfahren nach einem der vorhergehenden Ansprüche,
- wobei der Linearaktuator (40) in einem ersten Modul (12) des Bremssystems (10) angeordnet ist und die Pumpe (50) in einem zweiten Modul (14) des Bremssystems (10) angeordnet ist, wobei die Module (12, 14) zueinander separat sind.

5. Verfahren nach einem der vorhergehenden Ansprüche,
- wobei in dem ersten Modul (12) auch ein Hauptbremszylinder (20) angeordnet ist, welcher manuell betätigbar ist und fluidisch mit dem ersten Bremskreis (I) und/oder dem zweiten Bremskreis (II) verbunden ist.

6. Verfahren nach einem der vorhergehenden Ansprüche,
- wobei der erste Bremskreis (I) und der zweite Bremskreis (II) mittels eines Kreistrennventils (KTV) verbunden sind, und
- wobei die Bremskreise (I, II) durch Schließen des Kreistrennventils (KTV) getrennt werden.

7. Verfahren nach einem der vorhergehenden Ansprüche,
- wobei der erste Bremskreis (I) und der zweite Bremskreis (II) gemeinsam eine vorgegebene Bremswirkung erzeugen.

8. Verfahren nach Anspruch 7,
- wobei die Bremswirkung durch einen Fahrerbremswunsch und/oder ein Fahrassistenzsystem und/oder ein System zum autonomen Fahren vorgegeben wird.

9. Verfahren nach einem der vorhergehenden Ansprüche,
- wobei die Pumpe (50) und der Linearaktuator (40) unabhängig voneinander Bremsflüssigkeit ansaugen.

10. Verfahren nach Anspruch 9,
- wobei die Pumpe (50) und der Linearaktuator (40) Bremsflüssigkeit aus einem Bremsflüssigkeitsbehälter (60) ansaugen.

11. Verfahren nach einem der vorhergehenden Ansprüche,
- wobei eine Schlupfregelung an jeweiligen Radbremsen (B) über zugeordnete Radventile (E, A) erfolgt.

12. Verfahren nach einem der vorhergehenden Ansprüche,
- wobei Auslassventile (V1, V2) des ersten Bremskreises (I), welche eine Verbindung zum zweiten Bremskreis (II) herstellen, geschlossen sind.

13. Verfahren nach einem der vorhergehenden Ansprüche,
- wobei die Pumpe (50) nach dem Trennen der Bremskreise Fluid für eine erste Bremse B1 in einem ersten Kreislauf pumpt und Fluid für eine zweite Bremse B2 in einem zweiten Kreislauf pumpt.

14. Bremssystem (10) für ein Kraftfahrzeug, aufweisend
- einen ersten Bremskreis (I),
- einen zweiten Bremskreis (II),
- eine Pumpe (50), welche mit dem ersten Bremskreis (I) fluidisch verbunden ist,
- einen Linearaktuator (40), welcher mit dem zweiten Bremskreis (II) fluidisch verbunden ist,
- ein Kreistrennventil (KTV), welches den ersten Bremskreis (I) und den zweiten Bremskreis (II) fluidisch verbindet, und
- eine Steuerungsvorrichtung (16), welche dazu konfiguriert ist, ein Verfahren nach einem der vorhergehenden Ansprüche auszuführen

## Claims

1. A method of operating a braking system (10) having a first brake circuit (I) and a second brake circuit (II), wherein the braking system (10) has a pump (50) and a linear actuator (40),
wherein the method performs the following steps in response to a detected leak:
- isolating the first brake circuit (I) from the second brake circuit (II), then
- acting upon the first brake circuit (I) by means of the pump (50), and
- acting upon the second brake circuit (II) by means of the linear actuator (40),
wherein the first brake circuit is acted upon by means of the pump and the second brake circuit is acted upon by means of the linear actuator simultaneously or in a common time period.

2. The method as claimed in claim 1,
- wherein the leakage is detected when a liquid level in a brake fluid reservoir (60) falls below a predefined threshold value.

3. The method as claimed in any one of the preceding claims,
- wherein the first brake circuit (I) is assigned to a front axle and the second brake circuit (II) is assigned to a rear axle.

4. The method as claimed in any one of the preceding claims,
- wherein the linear actuator (40) is arranged in a first module (12) of the braking system (10) and the pump (50) is arranged in a second module (14) of the braking system (10), wherein the modules (12, 14) are separate from one another.

5. The method as claimed in any one of the preceding claims,
- wherein a master brake cylinder (20), which is manually actuatable and is fluidically connected to the first brake circuit (I) and/or the second brake circuit (II), is also arranged in the first module (12).

6. The method as claimed in any one of the preceding claims,
- wherein the first brake circuit (I) and the second brake circuit (II) are connected by means of a circuit isolating valve (KTV), and
- wherein the brake circuits (I, II) are isolated by closing the circuit isolating valve (KTV).

7. The method as claimed in any one of the preceding claims,
- wherein the first brake circuit (I) and the second brake circuit (II) together generate a predefined braking effect.

8. The method as claimed in claim 7,
- wherein the braking effect is predefined by a driver braking intention and/or a driver assistance system and/or a system for autonomous driving.

9. The method as claimed in any one of the preceding claims,
- wherein the pump (50) and the linear actuator (40) aspirate brake fluid independently of one another.

10. The method as claimed in claim 9,
- wherein the pump (50) and the linear actuator (40) aspirate brake fluid from a brake fluid reservoir (60).

11. The method as claimed in any one of the preceding claims,
- wherein slip control is performed at respective wheel brakes (B) via assigned wheel valves (E, A).

12. The method as claimed in any one of the preceding claims,
- wherein outlet valves (V1, V2) of the first brake circuit (I), which establish a connection to the second brake circuit (II), are closed.

13. The method as claimed in any one of the preceding claims,
- wherein, after the isolation of the brake circuits, the pump (50) pumps fluid for a first brake B1 in a first circuit and pumps fluid for a second brake B2 in a second circuit.

14. A braking system (10) for a motor vehicle, having
- a first brake circuit (I),
- a second brake circuit (II),
- a pump (50) which is fluidically connected to the first brake circuit (I),
- a linear actuator (40) which is fluidically connected to the second brake circuit (II),
- a circuit isolating valve (KTV) which fluidically connects the first brake circuit (I) and the second brake circuit (II), and
- a control device (16), which is configured to carry out a method as claimed in any one of the preceding claims.

## Revendications

1. Procédé de fonctionnement d'un système de freinage (10) comportant un premier circuit de freinage (I) et un second circuit de freinage (II), dans lequel le système de freinage (10) comprend une pompe (50) et un actionneur linéaire (40),
dans lequel le procédé effectue les étapes suivantes en réponse à une fuite détectée :
- séparation du premier circuit de freinage (I) et du second circuit de freinage (II), puis
- application de la pression au premier circuit de freinage (I) au moyen de la pompe (50), et
- actionnement du second circuit de freinage (II) au moyen de l'actionneur linéaire (40), dans lequel l'actionnement du premier circuit de freinage au moyen de la pompe et l'actionnement du second circuit de freinage au moyen de l'actionneur linéaire sont effectués simultanément ou dans une période de temps commune.

2. Procédé selon la revendication 1,
- dans lequel la fuite est détectée par le fait qu'un niveau de liquide dans un réservoir de liquide de frein (60) tombe en dessous d'un seuil prédéterminé.

3. Procédé selon l'une quelconque des revendications précédentes,
- dans lequel le premier circuit de freinage (I) est affecté à un essieu avant et le second circuit de freinage (II) est affecté à un essieu arrière.

4. Procédé selon l'une quelconque des revendications précédentes,
- dans lequel l'actionneur linéaire (40) est disposé dans un premier module (12) du système de freinage (10) et la pompe (50) est disposée dans un second module (14) du système de freinage (10), dans lequel les modules (12, 14) sont séparés l'un de l'autre.

5. Procédé selon l'une quelconque des revendications précédentes,
- dans lequel dans le premier module (12) un maître-cylindre de frein (20) est également disposé qui peut être actionné manuellement et est relié fluidiquement au premier circuit de frein (I) et/ou au second circuit de frein (II).

6. Procédé selon l'une quelconque des revendications précédentes,
- dans lequel le premier circuit de freinage (I) et le second circuit de freinage (II) sont reliés par une vanne de séparation de circuit (KTV), et
- dans lequel les circuits de freinage (I, II) sont séparés en fermant la vanne de séparation de circuit (KTV).

7. Procédé selon l'une quelconque des revendications précédentes,
- dans lequel le premier circuit de freinage (I) et le second circuit de freinage (II) produisent ensemble un effet de freinage prédéterminé.

8. Procédé selon la revendication 7,
- dans lequel l'effet de freinage est déterminé par une demande de freinage du conducteur et/ou un système d'assistance à la conduite et/ou un système de conduite autonome.

9. Procédé selon l'une quelconque des revendications précédentes,
- dans lequel la pompe (50) et l'actionneur linéaire (40) aspirent le liquide de frein indépendamment l'un de l'autre.

10. Procédé selon la revendication 9,
- dans lequel la pompe (50) et l'actionneur linéaire (40) aspirent le liquide de frein à partir d'un réservoir de liquide de frein (60).

11. Procédé selon l'une quelconque des revendications précédentes,
- dans lequel le contrôle du glissement est réalisé au niveau des freins de roue respectifs (B) via des valves de roue affectées (E, A).

12. Procédé selon l'une quelconque des revendications précédentes,
- dans lequel les soupapes d'échappement (V1, V2) du premier circuit de freinage (I), qui établissent une connexion avec le second circuit de freinage (II), sont fermées.

13. Procédé selon l'une quelconque des revendications précédentes,
- dans lequel la pompe (50), après que les circuits de freinage sont séparés, pompe le fluide pour un premier frein B1 dans un premier circuit et pompe le fluide pour un second frein B2 dans un second circuit.

14. Système de freinage (10) pour un véhicule automobile, comprenant
- un premier circuit de freinage (I),
- un second circuit de freinage (II),
- une pompe (50) qui est reliée fluidiquement au premier circuit de freinage (I),
- un actionneur linéaire (40) qui est relié fluidiquement au second circuit de freinage (II),
- une vanne de séparation de circuit (KTV) qui relie fluidiquement le premier circuit de freinage (I) et le second circuit de freinage (II), et
- un dispositif de commande (16), qui est configuré pour exécuter un procédé selon l'une quelconque des revendications précédentes.
